# EUROPÄISCHE PATENTSCHRIFT

(11) **EP 3 211 470 B1**
(45) Veröffentlichungstag und Bekanntmachung des Hinweises auf die Patenterteilung: **30.01.2019**
(21) Anmeldenummer: 17158166.3
(22) Anmeldetag: 27.02.2017
(51) Int. Cl.: G02B 23/10, F41G 1/34, G02B 27/34, G02B 5/12, G02B 5/136

(54) **VORRICHTUNG ZUR BELEUCHTUNG EINER ZIELMARKE**
DEVICE FOR ILLUMINATING A SIGHT
DISPOSITIF DESTINÉ À ÉCLAIRER UN RÉTICULE

(30) Priorität: 29.02.2016 AT 501542016
(43) Veröffentlichungstag der Anmeldung: 30.08.2017
(73) Patentinhaber: Swarovski-Optik KG., 6067 Absam (AT)
(72) Erfinder: OBLEITNER, Johannes, 6067 Absam (AT); ZANGERL, Alois, 6130 Schwaz (AT)
(74) Vertreter: Burger, Hannes

(56) Entgegenhaltungen:
- EP-A2- 0 179 036
- US-A- 5 054 917
- US-B1- 6 802 131

## Beschreibung

Die Erfindung betrifft eine Optische Vorrichtung zur Darstellung eines Strichbildes oder einer Zielmarke in einem Mess- oder Zielfernrohr, umfassend
- eine Strichplatte mit einem auf einer Oberfläche angeordneten Strichbild,
- eine Lichtquelle zur Beleuchtung dieses Strichbildes
- wobei die Strichplatte eine seitlich zu der das Strichbild aufweisenden Oberfläche angeordnete Eintrittsfläche für einen Beleuchtungs-Strahlengang aufweist.

Strichplatten werden in dem Beobachtungsstrahlengang von optischen Beobachtungs- und Zielgeräten, insbesondere Zielfernrohren vorgesehen. Die auf den Träger aufgebrachte absehbare Zielmarkierung wird dabei als Strichbild bezeichnet. Beim Jagen in der Morgen- oder Abenddämmerung ist das Strichbild oft auf dem dunklen Wildkörper nicht zu erkennen. Es sind daher verschiedene Lösungen zur Beleuchtung des Strichbildes vorgeschlagen worden. So ist es bekannt, das Strichbild in den als Glasplatte ausgebildeten Träger einzuätzen und mit Pigmenten aufzufüllen. Durch Beleuchtung mit einer Lichtquelle hebt es sich aufgrund von Lichtstreuung und Lichtbeugung des Füllmaterials hell vom Hintergrund ab. Allerdings wird bei der bekannten Strichplatte nur ein sehr geringer Teil des Lichts in Richtung des Beobachters umgelenkt. Nach EP 0 886 163 B1 wird als Strichbild daher ein Beugungsgitter verwendet, das auf den Träger aufgebracht wird. Dabei wird die Tatsache ausgenutzt, dass nach der Beugungstheorie die erste Beugungsordnung eine besonders hohe Lichtintensität aufweist. Damit wird zwar die Helligkeit des beleuchteten Strichbildes etwas verbessert, jedoch wird das Licht nicht gleichmäßig ausgestrahlt, das heißt, die Helligkeit ist von der Betrachtungsrichtung abhängig. Auch wird nur ein sehr geringer Teil der eingebrachten Lichtleistung in die Betrachtungsrichtung umgelenkt.

Ferner ist es aus DE 10 051 448 A1 bekannt, den Träger mit einem Lichtleiter einzufassen, der von der Lichtquelle beleuchtet wird. Da damit das Licht in einen zu großen Raumwinkel gestreut wird, ist für eine ausreichende Helligkeit der Energieverbrauch erheblich. Nach DE 29 903 989 U1 wird ein Strichbild, nämlich eine Zielmarkierung in der Mitte der Strichplatte, in ein weiteres, auf dem Träger aufgebrachtes Strichbild in Form eines Fadenkreuzes von einer seitlich an der Strichplatte angeordneten Projektionseinrichtung über einen Strahlenteiler im Beobachtungsstrahlengang auf den Träger projiziert. Dadurch wird zwar ein helles Strichbild erzielt, jedoch sind der Platzbedarf und das Gewicht erheblich. Zudem wird die Lichttransmission durch die Teilerschicht zwischen den beiden Prismen des Strahlenteilers reduziert. Auch ist es schwierig, die beiden Strichbilder zueinander zu justieren. Aus EP 0 718 585 B1 ist ein Absehen bekannt, das einen beleuchteten Ring mit Balken als Zielmarkierung aufweist, die zur Bildung beleuchteter Punkte an der Spitze mit einer Reflexionsfläche versehen sind.

Eine Vorrichtung der eingangs genannten Art ist aus der EP 1 653 271 A1 bekannt geworden. Um eine großflächige Beleuchtung von Strichbildern, die von einer punktförmigen Struktur abweichen, beispielsweise von ringförmigen Strichbildern, zu ermöglichen, kann die Verwendung einer auf eine größere Fläche ausgedehnten Beleuchtung notwendig sein. Setzt man bei der bekannten Lösung eine derartige Beleuchtung ein, beispielsweise in Form einer LED mit einem Diffusor, so kommt es zu einer geringeren Leuchtdichte im Bereich des Strichbildes.

Das Dokument US 5,054,917 A behandelt ein optronisches System zur Kalibrierung eines Zielfernrohres zu der Richtung der Laufachse einer Waffe. Dabei ist eine opake Strichplatte mit Löchern in der Form eines Fadenkreuzes als Teil eines Kollimators vorgesehen.

Das Dokument US 6,802,131 B1 beschreibt eine Strichplatte aus einem transparenten Material von kreisscheibenförmiger Gestalt. An einer der beiden Kreisflächen der Strichplatte ist ein fadenkreuzförmiges Strichbild angeordnet. An seiner Mantelfläche wird die Strichplatte vollumfänglich von einem Lichtleiter gefasst, durch den Licht zur Beleuchtung des Strichbilds in die Strichplatte eingestrahlt wird. Am äußeren Umfang des die Strichplatte umfassenden Lichtleiters ist zusätzlich eine reflektierende Lage angeordnet, durch die Licht, das am äußeren Umfang des Lichtleiters austritt, in die Strichplatte zurück reflektiert werden kann. Als eigentliche Lichtquelle ist dabei eine LED vorgesehen, deren Licht an einem Ende des Lichtleiters in diesen eingekoppelt wird.

Das Dokument EP 0 179 036 A2 beschreibt eine durchsichtige Strichplatte eines Zielfernrohres mit einer Lichtquelle zur Beleuchtung des an der Strichplatte angebrachten Strichbilds. Eine Zielmarke in Form eines Fadenkreuzes wird dabei durch eine oder mehrere Lichtquellen, die im Randbereich der Strichplatte angeordnet sind, bzw. die in das Material der Strichplatte eingeformt sind, beleuchtet. Dabei werden in Glas eingekapselte radioaktive Betastrahler als Lichtquelle verwendet.

Es ist daher eine Aufgabe der Erfindung, die Beleuchtung von Strichbildern dahingehend zu verbessern, dass auch bei Strichbildern mit einer von einer punktförmigen Struktur abweichenden Form eine gute Sichtbarkeit und eine hohe Leuchtdichte im Bereich des Strichbildes gewährleistet ist.

Diese Aufgabe wird durch eine Vorrichtung der eingangs genannten Art erfindungsgemäß dadurch gelöst, dass an der Strichplatte zumindest ein Retroreflektor angeordnet ist, wobei eine Reflexionsschicht des Retroreflektors der Strichplatte zugewandt ist.

Die erfindungsgemäße Lösung ermöglicht es, aus der Strichplatte austretendes Licht wieder in die Strichplatte einzukoppeln, und in Richtung des Strichbildes zu reflektieren, sodass die Leuchtdichte in Bereich des Strichbildes erhöht wird. Zudem kann Licht, welches im Bereich des Strichbildes nicht in Richtung Beobachter ausgekoppelt wird, durch Retroreflexion wieder auf das Strichbild zurückgeworfen werden, wodurch im Bereich des Strichbildes eine erhöhte Leuchtdichte erzielt wird. Dieser Vorteil ergibt sich natürlich auch bei einer punktförmigen Zielmarke. Mit der erfindungsgemäßen Lösung lässt sich generell die zur Beleuchtung des Strichbildes bzw. der Zielmarke erforderliche Energie wesentlich reduzieren. An dieser Stelle sei darauf hingewiesen, dass die Begriffe Zielmarke und Strichbild in diesem Dokument synonym verwendet werden.

Eine besonders effektive Lichtrückeinkopplung und Umlenkung des Lichtes in Richtung des Strichbildes lässt sich dadurch erzielen, dass der zumindest eine Retroreflektor zumindest auf einer ersten Seite einer durch das Strichbild und normal zu der das Strichbild aufweisenden Oberfläche der Strichplatte verlaufenden Ebene angeordnet ist, während sich die Eintrittsfläche für den Beleuchtungs-Strahlengang auf einer der ersten Seite gegenüberliegenden, zweiten Seite der Ebene befindet.

Gemäß einer bevorzugten Variante der Erfindung kann es vorgesehen sein, dass die Strichplatte eine erste Hauptoberfläche und eine zweite Hauptoberfläche aufweist, wobei die erste und die zweite Hauptoberfläche parallel zueinander verlaufen und durch eine Mantelfläche miteinander verbunden sind, wobei eine Summe von Flächeninhalten der beiden Hauptoberflächen größer als ein Flächeninhalt der Mantelfläche ist, wobei die Eintrittsfläche für den Beleuchtungsstrahlengang durch einen Abschnitt der Mantelfläche gebildet ist, und wobei das Strichbild auf einer der beiden Hauptoberflächen angeordnet ist.

Die Mantelfläche der Strichplatte kann eine glatte Oberfläche aufweisen. Die glatte Oberfläche ermöglicht eine gute Lichteinkopplung sowie eine gute Verbindbarkeit des Retroreflektors mit der Strichplatte.

Als besonders vorteilhaft hat es sich erwiesen, dass der Retroreflektor an einem von dem Abschnitt der Eintrittsfläche unterschiedlichen Abschnitt der Mantelfläche der Strichplatte angeordnet ist

Als besonders günstig hinsichtlich der Erhöhung der Leuchtdichte im Bereich der Strichplatte hat es sich erwiesen, dass der zumindest eine Retroreflektor zumindest an einem der Eintrittsfläche für den Beleuchtungsstrahlengang diametral gegenüberliegenden Abschnitt der Mantelfläche der Strichplatte angeordnet ist.

Weiters kann der zumindest eine Retroreflektor an zumindest einem an die Eintrittsfläche anschließenden Abschnitt der Mantelfläche der Strichplatte angeordnet sein.

Gemäß einer weiteren Variante der Erfindung kann der Retroreflektor an einer der das Strichbild aufweisenden Hauptoberfläche gegenüberliegenden Hauptoberfläche der Strichplatte angeordnet sein.

Bevorzugterweise ist die Strichplatte zylinderförmig ausgebildet und weist eine kegelschnittförmige, insbesondere kreisförmige, oder eine polygonale, insbesondere rechteckige, Grundfläche auf. Zudem kann die Strichplatte aus einem im sichtbaren Licht transparenten Material, insbesondere Glas oder Kunststoff, gebildet sein. Unter dem Begriff "transparent" wird in diesem Dokument verstanden, dass es sich bei dem verwendeten Material um ein im sichtbaren elektromagnetischen Spektralbereich durchsichtiges Material handelt.

Weiters können der Retroreflektor mit der Strichplatte durch eine im sichtbaren Licht transparente Schicht kraftschlüssig verbunden sein.

Gemäß einer vorteilhaften Variante der Erfindung kann es vorgesehen sein, dass der Retroreflektor einen Körper, insbesondere ein Auskoppelprisma, aufweist, der retroreflektierende Strukturen, insbesondere Mikroprismen, aufweist.

Als besonders vorteilhaft hat es sich herausgestellt, wenn der Retroreflektor durch eine Retroreflektor-Folie gebildet ist. Die Verwendung einer Retroreflektor-Folie ermöglicht eine sehr einfache Herstellung der erfindungsgemäßen Vorrichtung. Darüber hinaus kann die Folie durch entsprechendes Zuschneiden auf einfache Weise sehr exakt auf die gewünschte Größe und Form gebracht werden.

Indem ein Spiegel zur Umlenkung des von der Lichtquelle zu dem Strichbild führenden Beleuchtungs-Strahlengangs (BS) ausgebildet ist, der seitlich zu der das Strichbild aufweisenden Oberfläche an der Strichplatte angeordnet ist, kann eine kompakte Bauweise der mit der erfindungsgemäßen Vorrichtung ausgestatteten Fernrohre erreicht werden.

Der Spiegel weist gemäß der bevorzugten Variante der Erfindung zwei Brennpunkte auf, wobei eine Spiegelfläche des Spiegels konkav gekrümmt ausgebildet ist und die Lichtquelle an einer Vorderseite des Spiegels im Bereich eines ersten Brennpunktes angeordnet ist und das Strichbild durch die auf einen zweiten Brennpunkt des Spiegels hin gerichtete Lichtstrahlen beleuchtet ist.

Zum zweiten Brennpunkt hingerichtete Lichtstrahlen laufen nach Totalreflexion an den Hauptoberflächen und an dem Retroreflektor im Bereich des Strichbildes zusammen.

Zum besseren Verständnis der Erfindung wird diese anhand der nachfolgenden Figuren näher erläutert.

Es zeigen jeweils in stark vereinfachter, schematischer Darstellung:
- Fig. 1: eine Draufsicht auf eine Vorrichtung zur Darstellung eines Strichbildes;
- Fig. 2: einen Querschnitt entlang der Linie II-II in Fig. 1;
- Fig. 3: einen Querschnitt durch eine zweite Variante einer erfindungsgemäßen Strichplatte;
- Fig. 4: einen Querschnitt durch eine dritte Variante einer erfindungsgemäßen Strichplatte;
- Fig. 5: einen Querschnitt durch eine vierte Variante einer erfindungsgemäßen Strichplatte;
- Fig. 6: eine Draufsicht auf eine Strichplatte gemäß einer fünften Variante;
- Fig. 7: einen Querschnitt einer Strichplatte gemäß einer sechsten Variante;
- Fig. 8: einen Querschnitt einer Strichplatte gemäß einer siebenten Variante;
- Fig. 9: einen Querschnitt einer Strichplatte gemäß einer achten Variante;
- Fig. 10: eine Draufsicht auf eine Strichplatte gemäß einer neunten Variante;
- Fig. 11: einen Querschnitt einer Vorrichtung zur Darstellung eines durch eine Maske erzeugten Strichbildes;
- Fig. 12: einen Querschnitt einer Strichplatte gemäß einer zehnten Variante.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

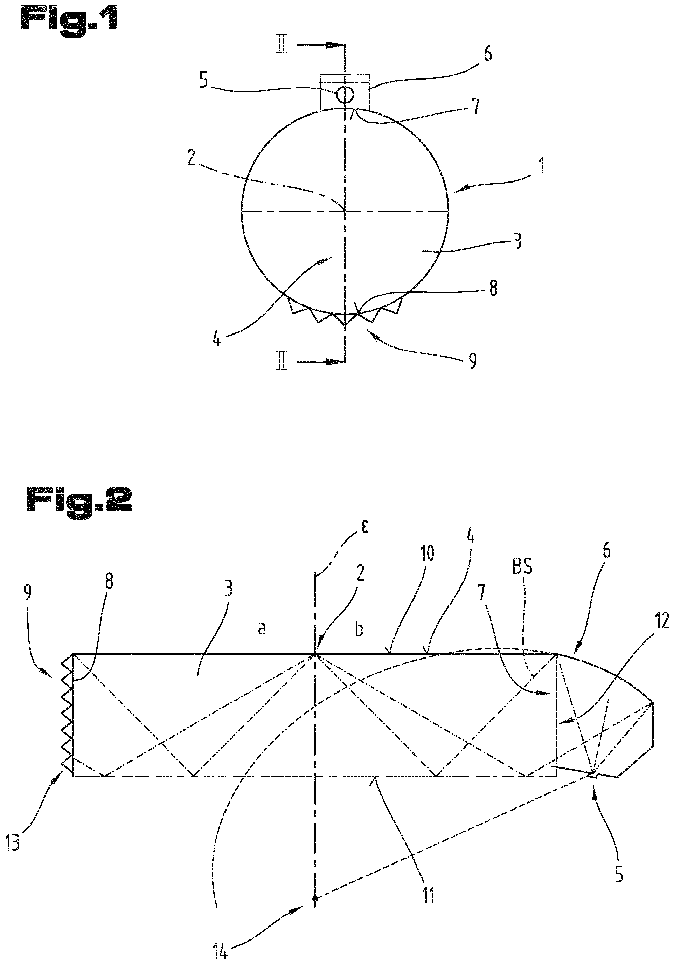

Die Fig. 1 zeigt eine Draufsicht auf eine optische Vorrichtung 1 zur Darstellung eines Strichbildes 2. Voraussetzungsgemäß entspricht die Blickrichtung auf die Zeichnungsebene der Fig. 1 (senkrecht auf die Zeichnungsebene) der Richtung der optischen Achse des Beobachtungsstrahlengangs eines mit der optischen Vorrichtung 1 ausgestatteten Fernrohrs bzw. Zielfernrohrs.

Gemäß Fig. 1 weist die optische Vorrichtung 1 zur Darstellung des Strichbildes 2 eine Strichplatte 3 sowie eine Lichtquelle 5 zur Beleuchtung dieses Strichbildes 2 auf. Das Strichbild 2 ist auf einer Oberfläche 4 der Strichplatte 3 angeordnet. Die Strichplatte 3 selbst kann zylinderförmig ausgebildet sein oder eine kegelschnittförmige, insbesondere kreisförmige, oder eine polygonale, insbesondere rechteckige, Grundfläche aufweisen. Zudem ist die Strichplatte 3 aus einem im sichtbaren Licht transparenten Material, insbesondere Glas oder Kunststoff, gebildet.

Das Strichbild 2 kann durch eine beugende und/oder streuende Mikrostruktur, die zum Beispiel durch Ätzung hergestellt ist, oder durch ein Beugungsgitter an der Trägeroberfläche gebildet sein. Bei einem eingeätzten oder eingearbeiteten Strichbild 2 kann in die gebildete Vertiefung ein Füllmaterial aus Pigmenten eingebracht werden, damit sich bei Beleuchtung mit der Lichtquelle das Strichbild 2 aufgrund von Lichtstrahlung und Lichtbeugung an den Pigmenten hell vom Hintergrund abhebt. Dabei können photoluminiszierende Pigmente verwendet werden, die z.B. unter UV-Bestrahlung sichtbares Licht abgeben.

Das Strichbild 2 kann auch aus abwechselnd angeordneten transparenten Lücken und lichtundurchlässigen Stegen bestehen. Das Verhältnis der Breite der Stege zur Breite der Lücken ist vorzugsweise grösser oder gleich 1:1. Die Teilungsperiode des Amplitudengitters ist nach der Beugungsformel von der Lichtwellenlänge, dem Winkel des eintretenden und des austretenden Lichts sowie vom Brechungsindex der Luft und dem Material des Trägers abhängig.

Seitlich zu der das Strichbild 2 aufweisenden Oberfläche 4 ist an der Strichplatte 3 ein Spiegel 6 zur Umlenkung eines von der Lichtquelle 5 zu dem Strichbild 2 führenden, in Fig. 2 mit dem Bezugszeichen BS gekennzeichneten, Beleuchtungs-Strahlengangs angeordnet. Der Spiegel 6 kann an die Strichplatte 3 angeklebt sein.

Gemäß Fig. 2 weist die Strichplatte 3 eine seitlich zu der das Strichbild 2 aufweisenden Oberfläche angeordnete Eintrittsfläche 7 für den Beleuchtungs-Strahlengang BS auf. Wie aus Figur 2 erkennbar ist, ist erfindungsgemäß an einer Licht-Austrittsfläche 8 der Strichplatte 3 ein Retroreflektor 9 angeordnet. Eine Reflexionsschicht des Retroreflektors 9 ist hierbei der Strichplatte 3 zugewandt. Unter einem Retroreflektor wird ein reflektierendes Material verstanden, welches die einfallende Strahlung weitgehend unabhängig von der Ausrichtung des Reflektors zurück in Richtung zur Strahlungsquelle reflektiert. Retroreflektoren sind in großer Zahl, beispielsweise aus der US 5,764,413, bekannt geworden.

Der Retroreflektor 9 weist bevorzugt eine Reflexionsschicht mit aus Mikroprismen oder Mikroglaskugeln gebildeten retroreflektierenden Strukturen auf, wobei die Reflexionsschicht mit einer für sichtbares Licht transparenten Deckschicht mit einer planen Oberfläche versehen sein kann.

Weiters ist der Retroreflektor 9 auf einer ersten Seite a einer durch das Strichbild 2 und normal zu der das Strichbild 2 aufweisenden Oberfläche der Strichplatte 3 verlaufenden Ebene ε angeordnet. Die Eintrittsfläche 7 für den Beleuchtungs-Strahlengang BS befindet sich auf einer der Seite a gegenüberliegenden, zweiten Seite b der Ebene ε. Zudem kann der Retroreflektor 9 mit der Strichplatte 3 durch eine im sichtbaren Licht transparente Schicht kraftschlüssig verbunden sein. Zur Verbindung des Retroreflektors kann beispielsweise ein Klebstoff, beispielsweise UV-härtende Acrylate, oder Epoxidharze, etc., verwendet werden.

Der Retroreflektor 9 kann durch eine Retroreflektor-Folie gebildet sein, wie dies in Fig. 2 dargestellt ist.

Wie aus Fig. 2 weiters erkennbar ist, weist die Strichplatte 3 eine erste Hauptoberfläche 10 und eine zweite Hauptoberfläche 11 auf. Die erste Hauptoberfläche 10 und die zweite Hauptoberfläche 11 verlaufen parallel zueinander und sind durch eine Mantelfläche 12 miteinander verbunden. Die Mantelfläche 12 der Strichplatte 3 kann eine glatte Oberfläche aufweisen.

Eine Summe der Flächeninhalte der beiden Hauptoberflächen 10, 11 kann hierbei größer sein als ein Flächeninhalt der Mantelfläche 12. Die Eintrittsfläche 7 für den Beleuchtungs-Strahlengang BS ist durch einen Abschnitt der Mantelfläche 12 gebildet. Der Retroreflektor 9 ist an einem von dem Abschnitt der Eintrittsfläche 7 unterschiedlichen Abschnitt der Mantelfläche 12 der Strichplatte 3 angeordnet. Der Retroreflektor 9 ist in der dargestellten Ausführungsform an einer der Eintrittsfläche 7 für den Beleuchtungs-Strahlengang BS diametral gegenüberliegenden Abschnitt 13 der Mantelfläche 12 der Strichplatte angeordnet. Allerdings ist diese Anordnung nicht zwingend, so kann der Retroreflektor 9 ganz allgemein an einem an die Eintrittsfläche 7 anschließenden Abschnitt der Mantelfläche 12 angeordnet sein, an dem von der Lichtquelle 5 erzeugtes Licht aus der Strichplatte 3 austritt, so kann der Retroreflektor 9 auch mit Ausnahme der Eintrittsfläche 7 die gesamte Mantelfläche 12 umfassen.

Das Strichbild 2 ist in den in den Figuren 2 - 5 dargestellten Ausführungsformen auf der Hauptoberfläche 10 angeordnet.

Der Spiegel 6 weist zwei Brennpunkte auf, wobei eine Spiegelfläche des Spiegels 6 konkav gekrümmt ausgebildet ist. Die Lichtquelle 5 ist an einer Vorderseite des Spiegels 6 im Bereich eines ersten Brennpunktes des Spiegels 6 angeordnet. Die zu einem zweiten Brennpunkt 14 des Spiegels 6 hin gerichteten Lichtstrahlen, welche den Beleuchtungs-Strahlengang BS bilden, beleuchten das Strichbild 2.

Zur Verdeutlichung der geometrischen Beziehungen der Lichtquelle 5, des Spiegels 6 und des erwähnten zweiten Brennpunkts 14, ist in den Figuren 2 bis 5 eine die gekrümmte Spiegelfläche des Spiegels 6 einhüllende Ellipse durch einen strichliert eingezeichneten Bogen angedeutet. Die beiden Brennpunkte dieser Ellipse fallen mit der Lichtquelle 5 einerseits und mit dem genannten zweiten Brennpunkt 14 des Spiegels 6 andererseits zusammen.

Die nach Reflexion an der Spiegelfläche des Spiegels 6 auf den zweiten Brennpunkt 14 hin gerichteten Lichtstrahlen laufen nach Totalreflexion an der Hauptoberfläche 11 im Bereich des auf der anderen Hauptoberfläche 10 angeordneten Strichbildes 2 zusammen. Ein Teil des am Strichbild 2 ankommenden Lichts tritt aus der Strichplatte 3 aus und wird von dem Strichbild 2 in den Beobachtungsstrahlengang des Fernrohrs abgestrahlt. Dies aufgrund der Wechselwirkung mit den das Strichbild 2 bildenden Pigmenten oder dem Beugungsgitter. Derjenige Teil des Lichts, der durch Totalreflexion an der Hauptoberfläche 10 in der Strichplatte 3 verbleibt, wird nacheinander an der Hauptoberfläche 11, an dem Retroreflektor 9 und ein weiteres Mal an der Hauptoberfläche 11 reflektiert und läuft sodann ebenfalls im Bereich des Strichbildes 2 zusammen und steht zu dessen Beleuchtung zusätzlich zur Verfügung. Auf diese Weise wird die Leuchtdichte im Bereich des Strichbildes 2 wesentlich erhöht.

Durch die Fokussierung des Lichtes am Strichbild 2 wird ein Strichbild mit hoher Leuchtdichte erhalten. Für eine gleichmäßige Helligkeitsverteilung über den Betrachtungswinkel besitzt das aus dem Strichbild 2 austretende Licht vorzugsweise denselben Öffnungswinkel wie die nachgeschaltete Beobachtungsoptik, also das Okular. Dies wird durch den Spiegel 6 und dessen Auslegung gemeinsam mit dem Beugungsgitter erreicht.

Das Strichbild 2 strahlt das Licht der seitlich angeordneten Lichtquelle vorzugsweise senkrecht zur Hauptoberfläche 11 der Strichplatte 3 ab. Mit einem Beugungsgitter sind jedoch auch andere Winkel als 90 Grad möglich. Auch ist zu berücksichtigen, dass die Strahlen in einem bestimmten Öffnungswinkel austreten.

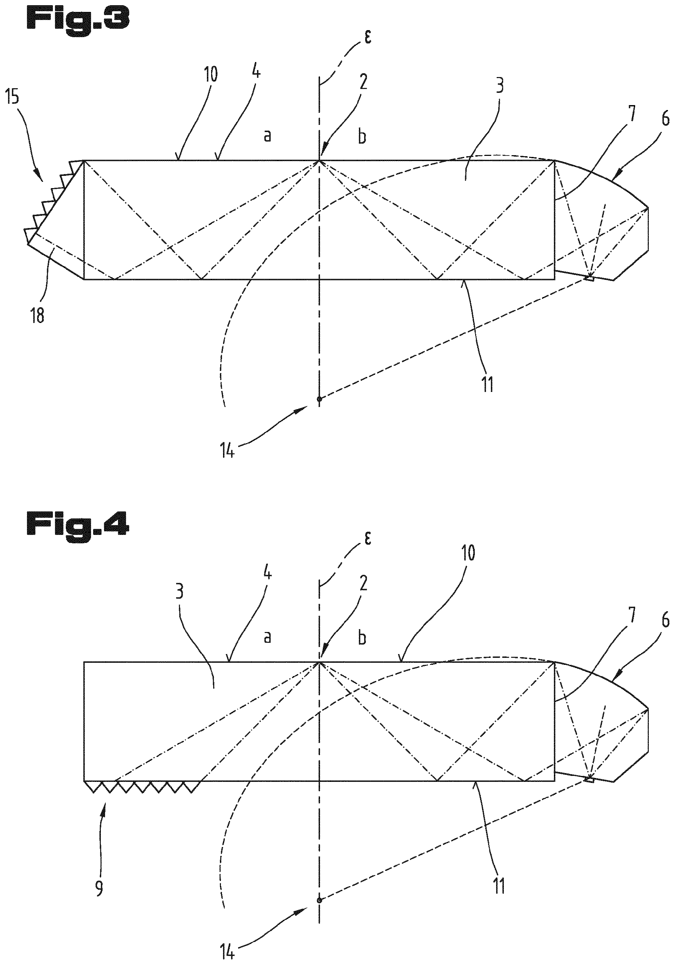

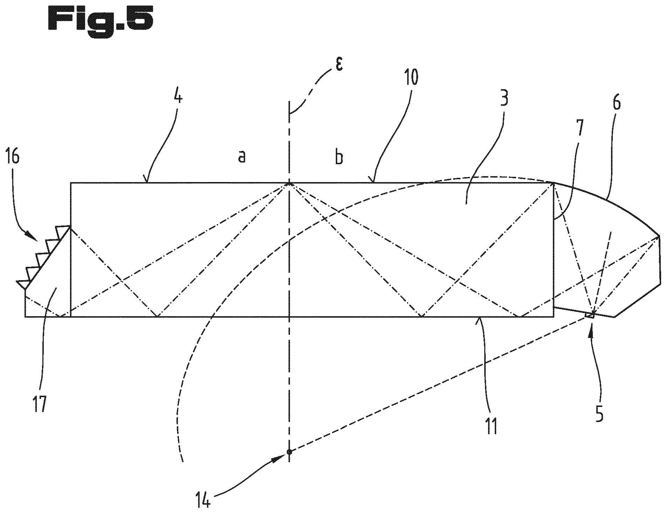

Gemäß Fig. 3 und Fig. 5 kann der Retroreflektor 15, 16 auch einen Körper 17, 18 aufweisen, der die Form eines Auskoppelprismas zum Auskoppeln von Licht aus der Strichplatte haben kann. Der Körper 17, 18 kann beispielsweise aus Glas oder Kunststoff gefertigt sein. Auf den Körper 17, 18 kann eine Retroreflektor-Folie aufgeklebt sein. Alternativ zum Aufkleben einer Retroreflektor-Folie kann aber auch eine Reflexionsschicht aus retroreflektierenden Strukturen direkt in den Körper 17, 18 eingebracht bzw. eingeformt sein. In den in Fig. 3 und Fig. 5 dargestellten Beispielen ist die Reflexionsschicht des jeweils dargestellten Retroreflektors 15, 16 relativ zu den Hauptoberflächen 10, 11 der Strichplatte 3 geneigt. Die Reflexionsschichten des Retroreflektors 15, 16 werden relativ zur Hauptausbreitungsrichtung des auf sie einfallenden Lichts vorzugsweise in senkrechter Lage angeordnet. Dadurch kann die Wirkung der Retroreflexion optimiert werden.

In dem in Fig. 4 dargestellten Beispiel ist der Retroreflektor 9 an der Hauptoberfläche 11 angeordnet, die der Hauptoberfläche 10 mit dem Strichbild 2 gegenüberliegt.

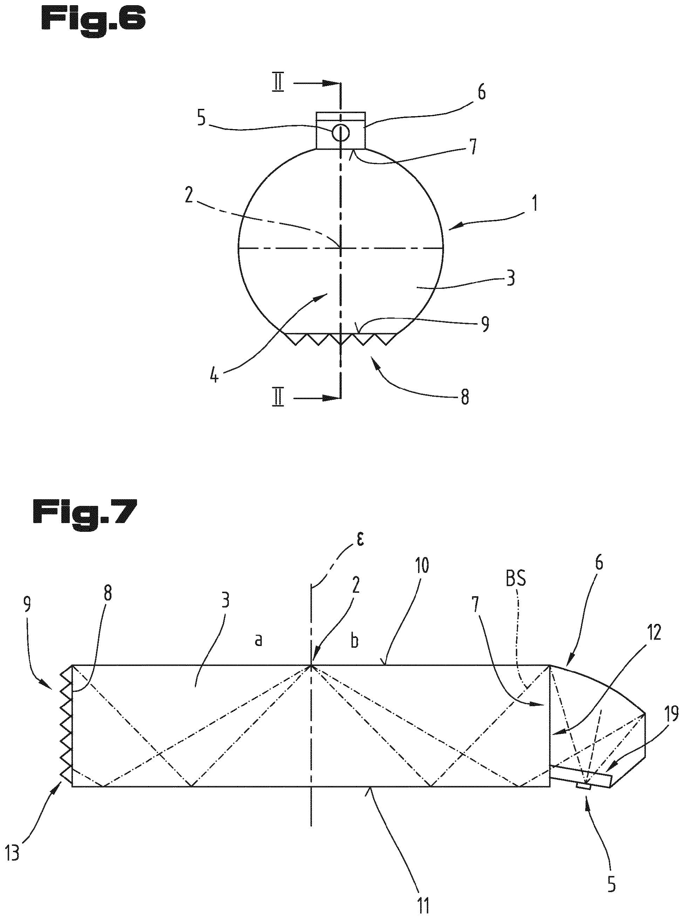

Die Fig. 6 zeigt ein alternatives Ausführungsbeispiel der Vorrichtung 1. Dabei ist die Eintrittsfläche 7 für den Beleuchtungs-Strahlengang BS (Fig. 2) ebenflächig ausgebildet, in dem die Strichplatte 3 bzw. deren Mantelfläche 12 im Bereich des Spiegels 6 abgeflacht ist. Dies wird beispielsweise dadurch erreicht, dass der die Strichplatte 3 bildende Glaskörper ebenflächig abgeschliffen wird. Auf diese Weise kann der Prismenkörper bzw. der Spiegel 6 einfacher mit der Strichplatte 3 verbunden werden. Diese Verbindung erfolgt, wie bei Glaskörpern üblich, durch sogenanntes Verkitten. Andererseits kann auch vorgesehen sein, dass, so wie dies in Fig. 6 dargestellt ist, auch die Licht-Austrittsfläche 8 an der Mantelfläche 12 der Strichplatte 3 ebenflächig ausgebildet ist. Bei einem durch eine Retroreflektor-Folie gebildeten Retroreflektor 9 steht für diesen somit eine ebenflächige Verbindungsstelle bzw. Klebefläche zur Verfügung.

Die Fig. 7 zeigt ein weiters Ausführungsbeispiel der Vorrichtung 1 in Schnittdarstellung. Dabei ist in dem Beleuchtungs-Strahlengang BS zwischen der Lichtquelle 5 und der reflektierenden Oberfläche des Spiegels 6 eine Streuscheibe 19 bzw. ein Diffusor angeordnet. Auf diese Weise wird der beleuchtete Flächenbereich an der Hauptoberfläche 10 im Bereich des Strichbildes 2 aufgeweitet bzw. vergrößert. Dadurch kann nun auch bei Verwendung eines komplexeren bzw. großflächigeren Strichbildes, anstelle nur eines einzigen zentral angeordneten Punktes als Zielmarke eine gleichmäßige Beleuchtung erreicht werden. Zusätzlich wird durch den der Eintrittsfläche 7 des Beleuchtungs-Strahlenganges BS diametral gegenüberliegend angeordneten Retroreflektor 9 die Leuchtdichte des Strichbilds 2 deutlich erhöht.

Die Verwendung der erfindungsgemäßen Strichplatte 3 mit einem daran angeordneten Retroreflektor 9, 15, 16 hat in jedem der beschriebenen Ausführungsbeispiele den Effekt einer gleichmäßigeren Ausleuchtung des Strichbildes 2, das dadurch für den Betrachter in all seinen Teilen weitestgehend gleichmäßig hell dargestellt werden kann.

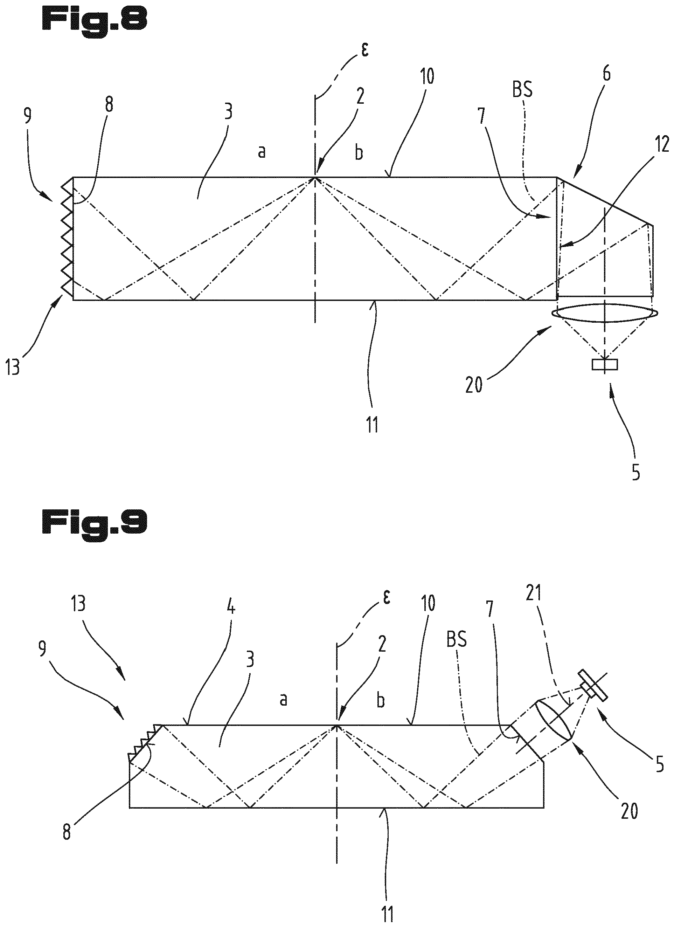

Die Fig. 8 zeigt einen Querschnitt einer Vorrichtung 1 gemäß einer weiteren Ausbildungsform. Bei dieser Vorrichtung 1 hat der Spiegel 6 zur Umlenkung des Lichts der Lichtquelle 5 in die Strichplatte 3 durch die Eintrittsfläche 7 hindurch eine plane Spiegel- bzw. Reflexionsfläche. Zur Erzeugung eines konvergenten Strahlenverlaufes auf das Strichbild 2 hin, ist zwischen der Lichtquelle 5 und dem Spiegel 6 eine Linse 20 angeordnet. Der an der Lichtaustrittsfläche 8 bzw. der gegenüberliegenden Seite der Mantelfläche 12 angeordnete Retroreflektor 9 sorgt wiederum dafür, dass in dem Bereich des Strichbilds 2 im Inneren der Strichplatte 3 total reflektiertes Licht wieder auf die Hauptoberfläche 10 mit dem Strichbild 2 zurückgeworfen wird.

Ein weiteres alternatives Ausführungsbeispiel der Vorrichtung 1 zur Darstellung des Strichbildes 2 einer Zielmarke ist in der Fig. 9 gezeigt. Dabei gelangt das Licht der Lichtquelle 5 nach Bündelung durch die Linse 20 schräg einfallend auf die Hauptoberfläche 11, wo eine erste Totalreflexion erfolgt. Zur Erzielung dieses entsprechend schräg einfallenden Strahlenverlaufs sind die Lichtquelle 5 und die Linse 20 ebenfalls schräg und seitlich an der Strichplatte 3 angeordnet. Eine optische Achse 21 des Beleuchtungs-Strahlenganges BS im Bereich von Lichtquelle 5 und Linse 20 ist dabei fluchtend mit der Hauptausbreitungsrichtung des Lichts auf die Hauptoberfläche 11 hin ausgerichtet. Die Eintrittsfläche 7 für den Beleuchtungs-Strahlengang BS ist dazu durch eine durch Schleifen an dem die Strichplatte 3 bildenden Glaskörper hergestellte, plane Fläche ausgebildet. Die Eintrittsfläche 7 ist außerdem senkrecht bezüglich der optischen Achse 21 der Lichtquelle 5 bzw. der Linse 20 ausgerichtet. In gleicher Weise kann die der Eintrittsfläche 7 gegenüberliegende Lichtaustrittsfläche 8 an der Strichplatte 3 hergestellt sein.

Alternativ dazu können die Eintrittsfläche 7 und die Lichtaustrittsfläche 8 auch durch einen separaten Körper realisiert sein, so wie es bei den Körpern 17, 18 in den Ausführungsbeispielen gemäß den Fig. 3 und 5 beschrieben ist.

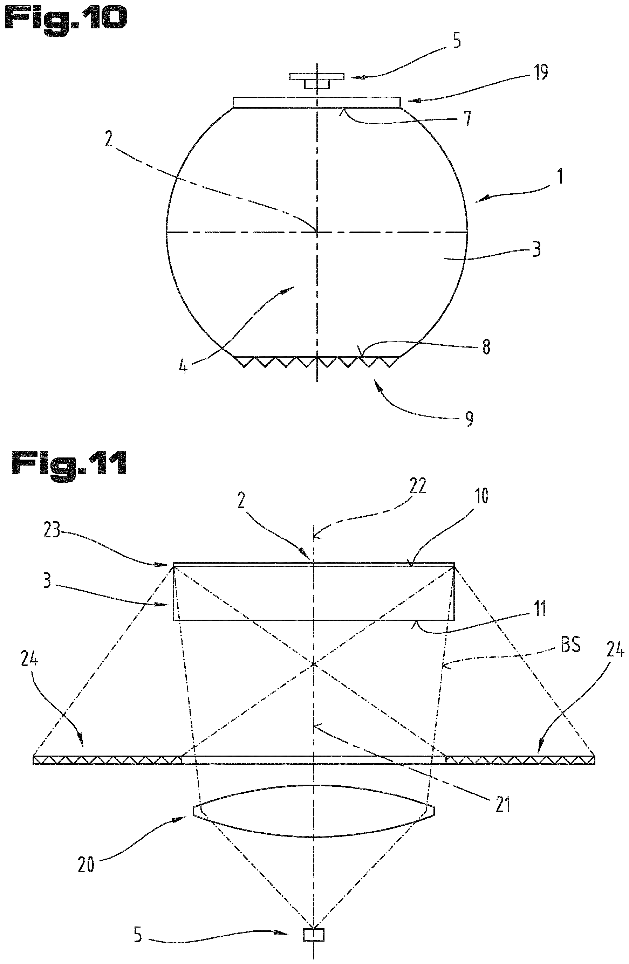

Die Fig. 10 zeigt eine Draufsicht auf die Vorrichtung 1 zur Darstellung des Strichbilds 2 einer Zielmarke in einem Fernrohr nach einem weiteren Ausführungsbeispiel. Die Eintrittsfläche 7 des Beleuchtungs-Strahlengangs BS ist dabei an der Strichplatte 3 ebenflächig ausgebildet, wobei an der Eintrittsfläche 7 eine Streuscheibe 19 zur Erzeugung eines diffusen Strahlenverlaufes des Lichts der Lichtquelle 5 angeordnet bzw. befestigt ist. Diese Eintrittsfläche 7 kann dabei als eine plan bzw. ebenflächig an dem Glaskörper der Strichplatte 3 angeschliffene Stelle hergestellt sein. Die Eintrittsfläche 7 ist außerdem parallel zur optischen Achse des Beobachtungsstrahlenganges (d.h. senkrecht zur Zeichenebene der Fig. 10) ausgerichtet. Durch den der Eintrittsfläche 7 gegenüberliegend angeordneten Retroreflektor 9 kann die Leuchtdichte im Bereich des Strichbilds 2 an der Oberfläche 4 der Strichplatte 3 erhöht werden.

Die Fig. 11 zeigt eine alternative Vorrichtung zur Darstellung eines Strichbildes 2 in Längsschnitt bezüglich der optischen Achse 21 des Beleuchtungs-Strahlenganges BS. Bei dieser Variante der Darstellung eines Strichbilds einer Zielmarke wird das Bild des Strichbilds 2 mit Hilfe einer Projektionsoptik (nicht dargestellt) mit einer optischen Achse 22 und nach Umlenkung durch ein Koppelprisma in den Beobachtungsstrahlengang des Fernrohrs eingekoppelt. Die Strichplatte 3 befindet sich dabei außerhalb des Beobachtungsstrahlengang des Fernrohrs. Das Strichbild 2 wird durch eine Maske 23 die, auf der Strichplatte 3 angebracht ist, erzeugt. Dazu enthält die Maske 23 physisch ein Negativ des Strichbilds 2, wobei Elemente des Strichbilds 2 bildende Stellen lichtdurchlässig, sonstige Bereiche der Maske 23 hingegen lichtundurchlässig sind. Die Maske 23 wird beispielsweise durch selektives Bedampfen des die Strichplatte 3 bildenden Glaskörpers mit einem Metall realisiert. Diese Strichplatte 3 mit der Maske 23 wird mit Hilfe der Lichtquelle 5 und einer Kondensor-Linse 20 beleuchtet. Gemäß diesem Ausführungsbeispiel weist die Vorrichtung 1 einen Retroreflektor 24 auf, der ringscheibenförmig ausgebildet und symmetrisch bezüglich der optischen Achse 21 des Beleuchtungs-Strahlengangs BS, vorzugsweise im Bereich der Kondensor-Linse 20, angeordnet ist. Durch die Anordnung dieses Retroreflektors 24 kann die Strahlungsdichte im Bereich des Strichbilds 2 bzw. der Maske 23 und somit die Lichtausbeute erhöht werden.

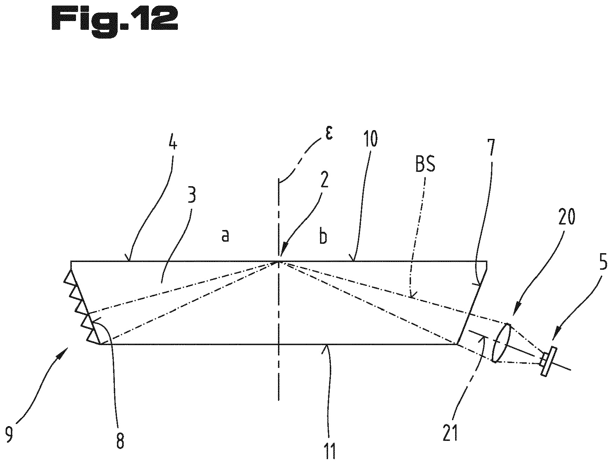

Eine Abwandlung des Ausführungsbeispiels der Vorrichtung 1 gemäß Fig. 9 ist schließlich in Fig. 12 gezeigt. Dabei ist die Anordnung der Eintrittsfläche 7 an der Strichplatte 3 einerseits und der Lichtquelle 5 mit der Linse 20 andererseits in der Weise vorgesehen, dass die Hauptausbreitungsrichtung des von der Lichtquelle 5 kommenden Lichts direkt auf die erste Hauptoberfläche 10 hin bzw. direkt auf das Strichbild 2 hin ausgerichtet ist. Die optische Achse 21 der die Lichtquelle 5 und die Linse 20 umfassenden Beleuchtungseinrichtung ist dabei direkt auf das Strichbild 2 hin ausgerichtet. Entsprechend dieser Ausbildung der Eintrittsfläche 7 an der Strichplatte 3, ist auch die Licht-Austrittsfläche 8 der Eintrittsfläche 7 für den Beleuchtungs-Strahlengang BS diametral gegenüberliegend angeordnet. Dabei ist die Licht-Austrittsfläche 8 bezüglich der Richtung des von der ersten Hauptoberfläche 10 reflektierten Lichts vorzugsweise senkrecht ausgerichtet.

Es versteht sich von selbst, dass die in den Figuren dargestellten Ausführungsformen miteinander kombiniert werden können, und an mehreren Stellen der Strichplatte 3 Retroreflektoren angebracht sein können.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Strichbild
- 3: Strichplatte
- 4: Oberfläche
- 5: Lichtquelle
- 6: Spiegel
- 7: Eintrittsfläche
- 8: Licht-Austrittsfläche
- 9: Retroreflektor
- 10: Hauptoberfläche
- 11: Hauptoberfläche
- 12: Mantelfläche
- 13: Abschnitt
- 14: Brennpunkt
- 15: Retroreflektor
- 16: Retroreflektor
- 17: Körper
- 18: Körper
- 19: Streuscheibe
- 20: Linse
- 21: Optische Achse
- 22: Optische Achse
- 23: Maske
- 24: Retroreflektor
- ε: Ebene
- a: Seite
- b: Seite

## Patentansprüche

1. Optische Vorrichtung (1) zur Darstellung eines Strichbildes (2) oder einer Zielmarke in einem Mess- oder Zielfernrohr, umfassend
- eine Strichplatte (3) mit einem auf einer Oberfläche (4) angeordneten Strichbild (2),
- eine Lichtquelle (5) zur Beleuchtung dieses Strichbildes (2)
- wobei die Strichplatte (3) eine seitlich zu der das Strichbild (2) aufweisenden Oberfläche angeordnete Eintrittsfläche (7) für einen von der Lichtquelle (5) zu dem Strichbild (2) führenden Beleuchtungs-Strahlengang (BS) aufweist,
- und wobei die Strichplatte (3) aus einem im sichtbaren Licht transparenten Material gebildet ist und der zu dem Strichbild (2) führende Beleuchtungs-Strahlengang (BS) sich im Inneren der Strichplatte (3) erstreckt,
wobei der von der Lichtquelle (5) zu dem Strichbild (2) führende Beleuchtungs-Strahlengang (BS) einen konvergenten Strahlenverlauf bildet, **dadurch gekennzeichnet, dass** an der Strichplatte (3) zumindest ein Retroreflektor (9, 15, 16) angeordnet ist, bei eine Reflexionsschicht des Retroreflektors (9, 15, 16) Mikroprismen oder Mikroglaskugeln enthält, durch die einfallende Strahlung weitgehend unabhängig von der Ausrichtung des Reflektors zurück in Richtung zur Strahlungsquelle reflektiert wird,
- und wobei die Reflexionsschicht der Strichplatte (3) zugewandt ist,
- sodass an dem Retroreflektor (9) reflektiertes Licht einen im Bereich des Strichbildes (2) zusammenlaufenden Strahlenverlauf bildet.

2. Vorrichtung nach Anspruch 1, **dadurch gekennzeichnet, dass** der zumindest eine Retroreflektor (9, 15, 16) zumindest auf einer ersten Seite (a) einer durch das Strichbild (2) und normal zu der das Strichbild (2) aufweisenden Oberfläche der Strichplatte (3) verlaufenden Ebene (ε) angeordnet ist, während sich die Eintrittsfläche (7) für den Beleuchtungs-Strahlengang (BS) auf einer der ersten Seite (a) gegenüberliegenden, zweiten Seite (b) der Ebene (ε) befindet.

3. Vorrichtung nach Anspruch 1 oder 2, **dadurch gekennzeichnet, dass** die Strichplatte (3) eine erste Hauptoberfläche (10) und eine zweite Hauptoberfläche (11) aufweist, wobei die erste Hauptoberfläche (10) und die zweite Hauptoberfläche (11) parallel zueinander verlaufen und durch eine Mantelfläche (12) miteinander verbunden sind, wobei eine Summe von Flächeninhalten der beiden Hauptoberflächen (10, 11) größer als ein Flächeninhalt der Mantelfläche (12) ist, wobei die Eintrittsfläche (7) für den Beleuchtungs-Strahlengang (BS) durch einen Abschnitt der Mantelfläche (12) gebildet ist wobei das Strichbild (2) auf einer der beiden Hauptoberflächen (10, 11) angeordnet ist.

4. Vorrichtung nach Anspruch 3, **dadurch gekennzeichnet, dass** die Mantelfläche (12) der Strichplatte (3) eine glatte Oberfläche aufweist.

5. Vorrichtung nach Anspruch 3 oder 4, **dadurch gekennzeichnet, dass** der Retroreflektor (9, 15, 16) an einem Abschnitt der Mantelfläche (12) der Strichplatte (3) angeordnet ist,

6. Vorrichtung nach Anspruch 5, **dadurch gekennzeichnet, dass** der zumindest eine Retroreflektor (9, 15, 16) zumindest an einer der Eintrittsfläche (7) für den Beleuchtungs-Strahlengang (BS) diametral gegenüberliegenden Abschnitt (13) der Mantelfläche (12) der Strichplatte (3) angeordnet ist.

7. Vorrichtung nach Anspruch 5 oder 6, **dadurch gekennzeichnet, dass** der zumindest eine Retroreflektor (9, 15, 16) an zumindest einem an die Eintrittsfläche (7) anschließenden Abschnitt der Mantelfläche (12) der Strichplatte (3) angeordnet ist.

8. Vorrichtung nach Anspruch 5, **dadurch gekennzeichnet, dass** der zumindest eine Retroreflektor (9, 15, 16) an einer der das Strichbild (2) aufweisenden Hauptoberfläche (10) gegenüberliegenden Hauptoberfläche (11) der Strichplatte (3) angeordnet ist.

9. Vorrichtung nach einem der Ansprüche 1 bis 8, **dadurch gekennzeichnet, dass** die Strichplatte (3) zylinderförmig ausgebildet ist und eine kegelschnittförmige, insbesondere kreisförmige, oder eine polygonale, insbesondere rechteckige, Grundfläche aufweist.

10. Vorrichtung nach einem der Ansprüche 1 bis 9, **dadurch gekennzeichnet, dass** die Strichplatte (3) aus Glas oder Kunststoff gebildet ist.

11. Vorrichtung nach einem der Ansprüche 1 bis 10, **dadurch gekennzeichnet, dass** der Retroreflektor (9, 15, 16) mit der Strichplatte (3) durch eine im sichtbaren Licht transparente Schicht kraftschlüssig verbunden ist.

12. Vorrichtung nach einem der Ansprüche 1 bis 11, **dadurch gekennzeichnet, dass** der Retroreflektor (9, 15, 16) ein Auskoppelprisma mit retroreflektierenden Mikroprismen aufweist.

13. Vorrichtung nach einem der Ansprüche 1 bis 12, **dadurch gekennzeichnet, dass** der Retroreflektor (9, 15, 16) durch eine Retroreflektor-Folie gebildet ist.

14. Vorrichtung nach einem der Ansprüche 1 bis 13, **dadurch gekennzeichnet, dass** in dem Beleuchtungs-Strahlengang (BS) nach der Lichtquelle (5) eine Streuscheibe (19) angeordnet ist.

15. Vorrichtung nach einem der Ansprüche 1 bis 14, **dadurch gekennzeichnet, dass** in dem Beleuchtungs-Strahlengang (BS) nach der Lichtquelle (5) eine Linse (20) angeordnet ist.

16. Vorrichtung nach einem der Ansprüche 1 bis 15, **dadurch gekennzeichnet, dass** eine optische Achse (21) des Beleuchtungs-Strahlenganges (BS) im Bereich der Lichtquelle (5) und der Linse (20) bezüglich der Hauptausbreitungsrichtung des Lichts auf die erste Hauptoberfläche (10) hin oder auf die zweite Hauptoberfläche (11) hin fluchtend ausgerichtet ist.

17. Vorrichtung nach einem der Ansprüche 1 bis 16, **dadurch gekennzeichnet, dass** ein Spiegel (6) zur Umlenkung des von der Lichtquelle (5) zu dem Strichbild (2) führenden Beleuchtungs-Strahlengangs (BS) ausgebildet ist, der seitlich zu der das Strichbild (2) aufweisenden Oberfläche an der Strichplatte (3) angeordnet ist.

18. Vorrichtung nach Anspruch 17, **dadurch gekennzeichnet, dass** der Spiegel (6) zwei Brennpunkte aufweist, wobei eine Spiegelfläche des Spiegels (6) konkav gekrümmt ausgebildet ist und die Lichtquelle (5) an einer Vorderseite des Spiegels (6) im Bereich eines ersten Brennpunktes des Spiegels (6) angeordnet ist, und wobei das Strichbild (2) durch die auf einen zweiten Brennpunkt (14) des Spiegels (6) hin gerichteten Lichtstrahlen beleuchtet ist.

19. Vorrichtung nach Anspruch 18, **dadurch gekennzeichnet, dass** zum zweiten Brennpunkt (14) hin gerichtete Lichtstrahlen nach Totalreflexion an den Hauptoberflächen (10, 11) und Retroreflexion an dem Retroreflektor (9, 15, 16) im Bereich des Strichbildes (2) zusammenlaufen.

## Claims

1. An optical device (1) for displaying a reticle (2) or a target mark in a measuring or sighting telescope, comprising
- a reticle plate (3) with a reticle (2) arranged on one surface (4),
- a light source (5) for illuminating this reticle (2),
- wherein the reticle plate (3) has an entry surface (7), which is arranged laterally of the surface provided with the reticle (2), for an illumination beam path (BS) leading from the light source (5) to the reticle (2),
- wherein the reticle plate (3) is made of a material that is transparent in visible light and the illumination beam path (BS) leading to the reticle (2) extends in the interior of the reticle plate (3), and
- wherein the illumination beam path (BS) leading from the light source (5) to the reticle (2) forms a convergent beam path,
**characterized in that**
- at least one retroreflector (9, 15, 16) is arranged on the reticle plate (3), wherein a reflection layer of the retroreflector (9, 15, 16) contains microprisms or microscopic glass spheres, by means of which the incident radiation is reflected back in the direction of the radiation source largely independent of the orientation of the reflector,
- and wherein the reflection layer faces the reticle plate (3)
- such that light reflected on the retroreflector (9) forms a convergent beam path in the region of the reticle (2).

2. The device according to claim 1, **characterized in that** the at least one retroreflector (9, 15, 16) is arranged on at least a first side (a) of a plane (ε), which extends through the reticle (2) and normally with respect to the surface of the reticle plate (3) provided with the reticle (2), whereas the entry surface (7) for the illumination beam path (BS) is located on a second side (b) of the plane (ε) lying opposite of the first side (a).

3. The device according to claim 1 or 2, **characterized in that** the reticle plate (3) has a first main surface (10) and a second main surface (11), wherein the first main surface (10) and the second main surface (11) extend parallel to one another and are connected to one another by a lateral surface (12), wherein a sum of the surface areas of the two main surfaces (10, 11) is greater than a surface area of the lateral surface (12), wherein the entry surface (7) for the illumination beam path (BS) is formed by a portion of the lateral surface (12), and wherein the reticle (2) is arranged on one of the two main surfaces (10, 11).

4. The device according to claim 3, **characterized in that** the lateral surface (12) of the reticle plate (3) has a smooth surface.

5. The device according to claim 3 or 4, **characterized in that** the retroreflector (9, 15, 16) is arranged on a portion of the lateral surface (12) of the reticle plate (3).

6. The device according to claim 5, **characterized in that** the at least one retroreflector (9, 15, 16) is arranged on at least a portion (13) of the lateral surface (12) of the reticle plate (3), which lies diametrically opposite of the entry surface (7) for the illumination beam path (BS).

7. The device according to claim 5 or 6, **characterized in that** the at least one retroreflector (9, 15, 16) is arranged on at least a portion of the lateral surface (12) of the reticle plate (3), which is located adjacent to the entry surface (7).

8. The device according to claim 5, **characterized in that** the at least one retroreflector (9, 15, 16) is arranged on a main surface (11) of the reticle plate (3), which lies opposite of the main surface (10) provided with the reticle (2).

9. The device according to one of claims 1 to 8, **characterized in that** the reticle plate (3) is realized cylindrically and has a base surface that is conical in section, particularly circular, or polygonal, particularly rectangular.

10. The device according to one of claims 1 to 9, **characterized in that** the reticle plate (3) is made of glass or plastic.

11. The device according to one of claims 1 to 10, **characterized in that** the retroreflector (9, 15, 16) is non-positively connected to the reticle plate (3) by a layer that is transparent in visible light.

12. The device according to one of claims 1 to 11, **characterized in that** the retroreflector (9, 15, 16) has a decoupling prism with retroreflecting microprisms.

13. The device according to one of claims 1 to 12, **characterized in that** the retroreflector (9, 15, 16) is formed by a retroreflector foil.

14. The device according to one of claims 1 to 13, **characterized in that** a diffusor plate (19) is arranged in the illumination beam path (BS) downstream of the light source (5).

15. The device according to one of claims 1 to 14, **characterized in that** a lens (20) is arranged in the illumination beam path (BS) downstream of the light source (5).

16. The device according to one of claims 1 to 15, **characterized in that** an optical axis (21) of the illumination beam path (BS) is in the region of the light source (5) and the lens (20) oriented in alignment with the main direction of propagation of the light toward the first main surface (10) or toward the second main surface (11).

17. The device according to one of claims 1 to 16, **characterized in that** a mirror (6), which is designed for deflecting the illumination beam path (BS) leading from the light source (5) to the reticle (2), is arranged laterally of the surface on the reticle plate (3) provided with the reticle (2).

18. The device according to claim 17, **characterized in that** the mirror (6) has two focal points, wherein a mirror surface of the mirror (6) is concavely curved and the light source (5) is arranged on a front side of the mirror (6) in the region of a first focal point of the mirror (6), and wherein the reticle (2) is illuminated by the light beams directed at a second focal point (14) of the mirror (6).

19. The device according to claim 18, **characterized in that** light beams directed toward the second focal point (14) converge in the region of the reticle (2) after total reflection on the main surfaces (10, 11) and retroreflection on the retroreflector (9, 15, 16).

## Revendications

1. Dispositif (1) optique destiné à la représentation d'une image de lignes (2) ou d'un réticule dans un tube de mesure ou une lunette de visée, comprenant
- un repère de visée (3) avec une image de lignes (2) disposée sur une surface (4),
- une source de lumière (5) destinée à l'éclairage de cette image de lignes (2),
- le repère de visée (3) comportant une surface d'entrée (7) disposée latéralement par rapport à la surface comportant l'image de lignes (2) et destinée à un trajet de rayons d'éclairage (BS) qui conduit de la source de lumière (5) vers l'image de lignes (2),
- et le repère de visée (3) étant formé d'un matériau transparent à la lumière visible, et le trajet de rayons d'éclairage (BS) qui conduit vers l'image de lignes (2) s'étendant dans l'intérieur du repère de visée (3),
le trajet de rayons d'éclairage (BS) qui conduit de la source de lumière (5) vers l'image de lignes (2) formant un allure de rayons convergente,
**caractérisé en ce**
**qu'**au moins un rétroréflecteur (9, 15, 16) est disposé sur le repère de visée (3), une couche de réflexion du rétroréflecteur (9, 15, 16) contient des micro-prismes ou des micro-billes, le rayonnement incident est réfléchi en retour en direction de la source de rayonnement largement indépendamment de l'orientation du réflecteur,
- et la couche de réflexion étant tournée vers le repère de visée (3),
- de telle sorte que la lumière réfléchie sur le rétroréflecteur (9) forme une allure de rayons qui converge dans la zone de l'image de lignes (2).

2. Dispositif selon la revendication 1, **caractérisé en ce que** le rétroréflecteur (9, 15, 16) au moins au nombre de un est disposé au moins sur un premier côté (a) d'un plan (ε) traversant l'image de lignes (2) et s'étendant perpendiculairement à la surface du repère de visée (3) comportant l'image de lignes (2), tandis que la surface d'entrée (7) destinée au trajet de rayons d'éclairage (BS) se trouve sur un deuxième côté (b) du plan (ε) opposé au premier côté (a).

3. Dispositif selon la revendication 1 ou 2, **caractérisé en ce que** le repère de visée (3) comporte une première surface principale (10) et une deuxième surface principale (11), la première surface principale (10) et la deuxième surface principale (11) étant parallèles entre elles et étant raccordées l'une à l'autre par une surface d'enveloppe (12), une somme d'aires des deux surfaces principales (10, 11) étant plus grande qu'une aire de la surface d'enveloppe (12), la surface d'entrée (7) destinée au trajet de rayons d'éclairage (BS) étant formée par un tronçon de la surface d'enveloppe (12), l'image de lignes (2) étant disposée sur une des deux surfaces principales (10, 11).

4. Dispositif selon la revendication 3, **caractérisé en ce que** la surface d'enveloppe (12) du repère de visée (3) comporte une surface lisse.

5. Dispositif selon la revendication 3 ou 4, **caractérisé en ce que** le rétroréflecteur (9, 15, 16) est disposé sur un tronçon de la surface d'enveloppe (12) du repère de visée (3).

6. Dispositif selon la revendication 5, **caractérisé en ce que** le rétroréflecteur (9, 15, 16) au moins au nombre de un est disposé sur un tronçon (13) de la surface d'enveloppe (12) du repère de visée (3) qui est diamétralement opposé à la surface d'entrée (7) destinée au trajet de rayons d'éclairage (BS).

7. Dispositif selon la revendication 5 ou 6, **caractérisé en ce que** le rétroréflecteur (9, 15, 16) au moins au nombre de un est disposé sur au moins un tronçon de la surface d'enveloppe (12) du repère de visée (3) qui se raccorde à la surface d'entrée (7).

8. Dispositif selon la revendication 5, **caractérisé en ce que** le rétroréflecteur (9, 15, 16) au moins au nombre de un est disposé sur une surface principale (11) du repère de visée (3) opposée à la surface principale (10) comportant l'image de lignes (2).

9. Dispositif selon l'une des revendications 1 à 8, **caractérisé en ce que** le repère de visée (3) est constitué sous forme de cylindre et comporte une surface de base en forme de section conique, en particulier circulaire, ou polygonale, en particulier rectangulaire.

10. Dispositif selon l'une des revendications 1 à 9, **caractérisé en ce que** le repère de visée (3) est formé de verre ou de matière synthétique.

11. Dispositif selon l'une des revendications 1 à 10, **caractérisé en ce que** le rétroréflecteur (9, 15, 16) est, par liaison de force, raccordé au repère de visée (3) par une couche transparente à la lumière visible.

12. Dispositif selon l'une des revendications 1 à 11, **caractérisé en ce que** le rétroréflecteur (9, 15, 16) comporte un prisme de découplage avec des micro-prismes rétroréfléchis sants.

13. Dispositif selon l'une des revendications 1 à 12, **caractérisé en ce que** le rétroréflecteur (9, 15, 16) est formé par un film de rétroréflecteur.

14. Dispositif selon l'une des revendications 1 à 13, **caractérisé en ce qu'**une vitre diffusante (19) est disposée sur le trajet de rayons d'éclairage (BS) après la source de lumière (5).

15. Dispositif selon l'une des revendications 1 à 14, **caractérisé en ce qu'**une lentille (20) est disposée sur le trajet de rayons d'éclairage (BS) après la source de lumière (5).

16. Dispositif selon l'une des revendications 1 à 15, **caractérisé en ce qu'**un axe (21) optique du trajet de rayons d'éclairage (BS) dans la zone de la source de lumière (5) et de la lentille (20) est, par rapport à la direction de propagation principale de la lumière, aligné sur la première surface principale (10) ou sur la deuxième surface principale (11).

17. Dispositif selon l'une des revendications 1 à 16, **caractérisé en ce qu'**un miroir (6) est constitué pour dévier le trajet de rayons d'éclairage (BS) qui conduit de la source de lumière (5) vers l'image de lignes (2) et est disposé sur le repère de visée (3) latéralement par rapport à la surface comportant l'image de lignes (2).

18. Dispositif selon la revendication 17, **caractérisé en ce que** le miroir (6) comporte deux foyers, une surface de miroir du miroir (6) étant courbée de façon concave, et la source de lumière (5) étant disposée sur un côté avant du miroir (6) dans la zone d'un premier foyer du miroir (6), et l'image de lignes (2) étant éclairée par les rayons lumineux dirigés vers un deuxième foyer (14) du miroir (6).

19. Dispositif selon la revendication 18, **caractérisé en ce que** des rayons lumineux dirigés vers le deuxième foyer (14) convergent dans la zone de l'image de lignes (2) après une réflexion totale sur les surfaces principales (10, 11) et après rétroréflexion sur le rétroréflecteur (9, 15, 16).
